**Europäisches Patentamt**

**European Patent Office**

**Office européen des brevets**

(19)

(11) Veröffentlichungsnummer: **0 021 223**
**B1**

(12) EUROPÄISCHE PATENTSCHRIFT

(45) Veröffentlichungstag der Patentschrift:
**11.01.84**

(21) Anmeldenummer: **80103207.9**

(22) Anmeldetag: **10.06.80**

(51) Int. Cl.³: **F 16 H 1/08** // F04D29/04

(54) **Druckkammgetriebe.**

(30) Priorität: **16.06.79 DE 2924349**

(43) Veröffentlichungstag der Anmeldung:
**07.01.81 Patentblatt 81/1**

(45) Bekanntmachung des Hinweises auf die Patenterteilung:
**11.01.84 Patentblatt 84/2**

(84) Benannte Vertragsstaaten:
**CH FR GB IT LI NL**

(56) Entgegenhaltungen:
**DE - B - 1 188 890**
**DE - B - 1 215 463**
**DE - C - 401 652**
**FR - A - 417 813**

(73) Patentinhaber: **ZAHNRÄDERFABRIK RENK AKTIENGESELLSCHAFT, Gögginger Strasse 71 - 83, D-8900 Augsburg (DE)**

(72) Erfinder: **Pollak-Banda, Erich, Fontanestrasse 7, D-8900 Augsburg (DE)**
Erfinder: **John, Erich, Schmetterlingsweg 3, D-8900 Augsburg (DE)**

BUNDESDRUCKEREI BERLIN

Druckkammgetriebe

Die Erfindung betrifft ein Stirnradgetriebe mit zwei mit einer einfachen Schrägverzahnung versehener Zahnrädern, beiden Zahnrädern zugeordneten Druckgliedern zur Aufnahme der axialen Zahnkraftkomponenten und zwei Lagern für jede Welle.

Ein solches Stirnradgetriebe ist aus der DE-C 401 652 bekannt. Die Zahnräder und deren Druckglieder bilden eine bauliche Einheit. Die axialen Zahnkraftkomponenten entstehen durch die Schrägstellung der Zähne der Zahnräder. Die Druckglieder werden bei hohen Zahngeschwindigkeiten ab ungefähr 130 m/min anstelle von Axialdrucklagern verwendet, weil letztere sich bei diesen Geschwindigkeiten zu stark erwärmen und deshalb nicht brauchbar sind. Eine übliche Zahngeschwindigkeit der Zahnräder bei Druckverdichteranlagen ist beispielsweise 178 m/min bei einer Drehzahl von 13 400 U/min. Die zu übertragende Leistung beträgt beispielsweise 17 MW (etwa 23 100 PS). Bei den bekannten Stirnradgetrieben sind häufig die Zahnräder mit ihren Wellen einstückig hergestellt. Die Druckglieder können ebenfalls damit einstückig hergestellt oder aufgeschrumpft oder angeschraubt sein. Die Lager befinden sich beidseitig außerhalb der Druckglieder auf der Welle. Dies hat einige Nachteile: Die hohe Drehzahl bzw. Umfangsgeschwindigkeit führt zu einer Aufweitung der ringförmigen Druckglieder und damit zur Gefahr, daß die Druckglieder die Axialdrücke nicht mehr aufnehmen können und abgezogen werden. Die Geschwindigkeit, bei der die Schrumpfspannung der Druckglieder durch die Fliehkraft so weit aufgehoben wird, daß kein sicherer Betrieb mehr gewährleistet ist, liegt bei einer Teilkreisgeschwindigkeit von ungefähr 150 m/s. Die Umfangsgeschwindigkeit und damit die Gefahr einer Fliehkraftaufweitung versucht man bei den bekannten Stirnradgetrieben dadurch zu verhindern, daß man die Durchmesser der Zahnräder und damit auch deren Wellen kleiner macht. Dies ergibt jedoch verhältnismäßig breite Zahnräder, um den einzelnen Zähnen die für die Kraftübertragung erforderliche Stärke zu geben. Durch die Verbreiterung der Zahnräder kommt jedoch ein anderer Nachteil stärker zur Wirkung, nämlich deren Durchbiegung und Verdrillung infolge der großen Stützweite bzw. des großen Abstandes zwischen den beiden Lagern. Die Verdrillung versucht man durch schräges Anschleifen der Zähne zu kompensieren. Die angeschliffene Schräge der Zähne entspricht der Verdrillung bei Last. Wird jedoch das Getriebe nur mit Teillast betrieben, dann führt die Zahnschräge zu einer einseitigen Zahnbelastung. Weitere Nachteile bestehen darin, daß die Druckglieder die Öl- und Wärmeabfuhr der Verzahnung verhindern und, wenn an der Welle Flansche angeschmiedet sind, auf der Antriebsseite schwer zu montieren sind.

Durch die Erfindung soll die Aufgabe gelöst werden, eine gleichmäßige Anlage der Zahnflanken aneinander über die gesamte Zahnbreite im gesamten Geschwindigkeitsbereich zu erzielen, ohne daß Kompensations-Zahnschleifvorgänge zur Kompensation von Zahnverformungen bei hohen Drehzahlen erforderlich sind.

Diese Aufgabe wird gemäß der Erfindung dadurch gelöst, daß die Druckglieder im Abstand von den Zahnrädern auf den Wellen und die auf der einem Druckglied zugewandten Seite der Zahnräder befindlichen Lager zwischen den Zahnrädern und den Druckgliedern angeordnet sind.

Durch die Erfindung sind die Druckglieder von den Zahnrädern unabhängig, und der Lagerabstand ist wesentlich kleiner geworden. Dadurch können die Zahnräder im Durchmesser größer und so schmal gebaut werden, daß keine nachteilige Durchbiegung und Verdrillung auftritt. Die Zähne brauchen dadurch nicht mehr schräg angeschliffen zu werden und liegen bei jeder Zahngeschwindigkeit über ihre gesamte Zahnbreite aneinander an. Ferner kann der Fliehkraftaufweitung der Druckglieder durch zusätzliche Maßnahmen entgegengewirkt werden, z. B. durch kleineren Wellendurchmesser, ohne den Zahnrädern eine im Vergleich zum Durchmesser verhältnismäßig große Breite geben zu müssen. Die Öl- und Wärmeabfuhr der Verzahnung wird von den Lagern nicht so stark behindert wie früher von den Druckgliedern. Eine bevorzugte Ausführungsform der Erfindung besteht darin, daß das Druckglied mit der zugehörigen Welle ein einstückiges Teil bildet, vorzugsweise angeschmiedet ist.

Mehrere Ausführungsformen werden im folgenden mit Bezug auf die Zeichnungen als Beispiele beschrieben. In diesen zeigt

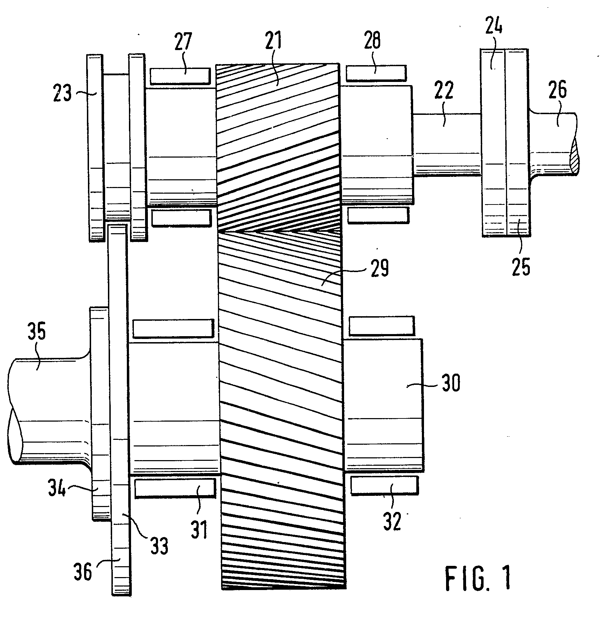

Fig. 1 bis 3 verschiedene Ausführungsformen von Stirnradgetrieben nach der Erfindung in Seitenansicht.

Das Stirnradgetriebe nach Fig. 1 enthält ein Ritzel 21 mit einer mit ihr einstückigen Welle 22, an deren einem Ende ein zweiseitig wirkendes Druckglied 23 und an deren anderem Ende ein Wellenanschlußflansch 24 angeschmiedet sind. An letzterem ist der Flansch 25 einer Abtriebswelle 26 angeschlossen. Zwischen Druckglied 23 und Ritzel 21 sowie zwischen diesem Ritzel 21 und dem Flansch 24 befindet sich je ein Lager 27 bzw. 28.

Mit dem Ritzel 21 steht ein Zahnrad 29 mit einer vorzugsweise einstückig mit ihr hergestellten Welle 30 im Eingriff. Beidseitig unmittelbar neben dem Zahnrad 29 (ein Stirnrad) befinden sich auf der Welle 30 Lager 31 und 32. An der Welle 30 befindet sich in einem durch das Lager 31 gegebenen Abstand vom Zahnrad 29 ein Flansch 33 zum Anschluß eines Flansches 34 einer Antriebswelle 35. Der Flansch 33 kann an dieser Welle 30 angeschmiedet sein. Der Außenumfang des Flansches 33 ist als ringförmiges Axialdruckglied 36 ausgebildet, das mit einer Umfangsnut des zweiseitig wirkenden Druckgliedes 23 im Eingriff steht.

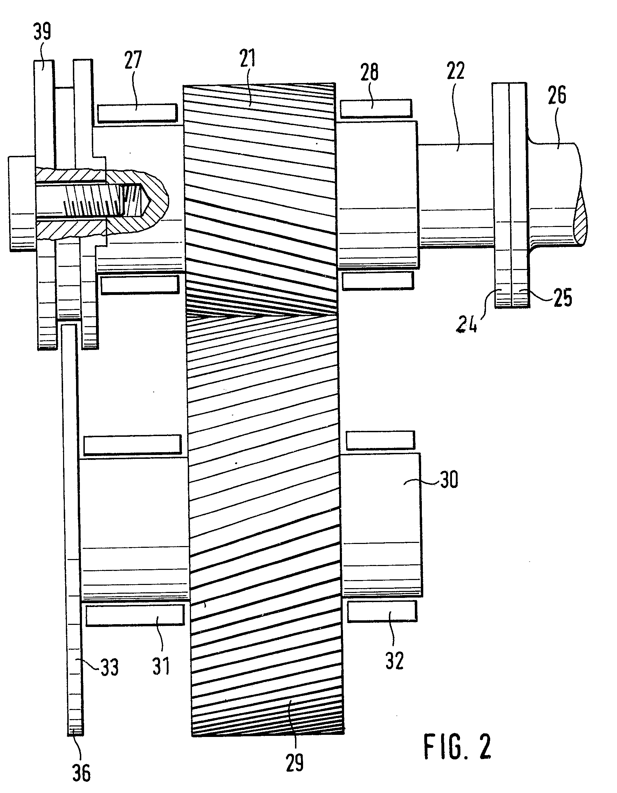

Fig. 2 entspricht im wesentlichen der Fig. 1, und einander entsprechende Teile sind mit gleichen Bezugszahlen versehen. In Fig. 2 ist jedoch kein angeschmiedetes, sondern ein an die Ritzelwelle 22 angeschraubtes, beidseitig wirkendes Druckglied 39 vorgesehen.

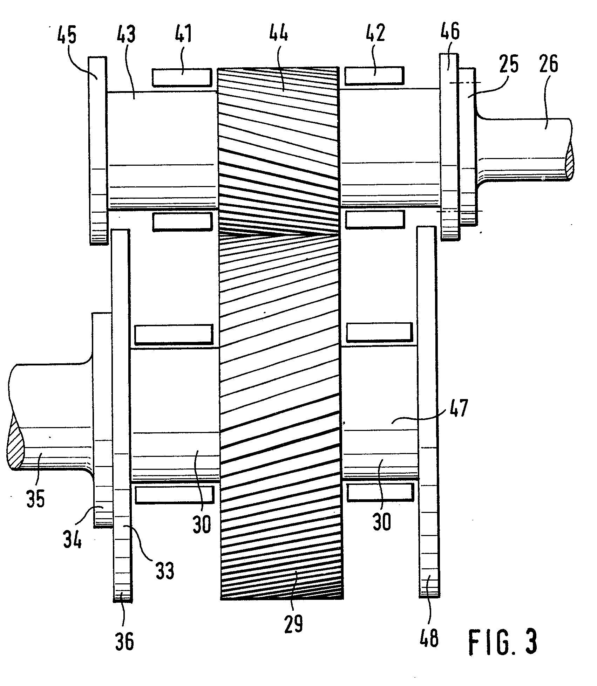

Bei der Ausführung nach Fig. 3 befinden sich Radiallager 41 und 42 einer Ritzelwelle 43 zwischen einem Ritzel 44 und einseitig wirkenden Druckgliedern 45 und 46. Ritzel 44, Welle 43 und Druckglieder 45 und 46 können wieder einstückig, vorzugsweise angeschmiedet, sein, und Ritzel 44 steht mit dem Zahnrad 29 im Eingriff, welches an seinem freien Wellenende 47 ebenfalls mit einem ring- bzw. scheibenförmigen Axialdruckglied 48 versehen ist. Letzteres wirkt einseitig mit dem Druckglied 46 zusammen, während das auf der dazu abgewandten Seite des Zahnrades 29 auf der Zahnradwelle 30 sitzende Axialdruckglied 36 einseitig mit dem Druckglied 45 zusammenwirkt.

Abwandlungen können darin bestehen, daß die Antriebswelle mit der Abtriebswelle vertauscht wird. Auch ist es möglich, auf die Ritzelwelle ein scheibenförmiges Axialdruckglied und auf die Zahnradwelle das andere Druckglied aufzubringen, also gegenüber den beschriebenen Ausführungsformen Druckglied und Axialdruckglied gegenseitig zu vertauschen.

»Angeschmiedet« bedeutet, daß das Druckglied bzw. Axialdruckglied mit der zugehörigen Welle aus einem Stück besteht und gegebenenfalls durch Schmieden formmäßig hergestellt wurde.

## Patentansprüche

1. Stirnradgetriebe mit zwei mit einer einfachen Schrägverzahnung versehenen Zahnrädern (21, 29; 44, 29), beiden Zahnrädern zugeordneten Druckgliedern (23, 36; 39, 36; 45, 46, 36, 48) zur Aufnahme der axialen Zahnkraftkomponenten und zwei Lagern (27, 28; 31, 32) für jede Welle (22, 30; 43, 30), dadurch gekennzeichnet, daß die Druckglieder (23, 36; 39, 36; 45, 46, 36, 48) im Abstand von den Zahnrädern (21, 29; 44, 29) auf den Wellen (22, 30; 43, 30) und die auf der einem Druckglied zugewandten Seite der Zahnräder befindlichen Lager (27, 28; 31, 32) zwischen den Zahnrädern und den Druckgliedern angeordnet sind.

2. Getriebe nach Anspruch 1, dadurch gekennzeichnet, daß das Druckglied (23, 36; 45, 46) mit der zugehörigen Welle (22, 30; 43, 30) ein einstückiges Teil bildet, vorzugsweise angeschmiedet ist.

## Claim

1. Spur gearing with two gear wheels (21, 29; 44, 29) provided with simple bevelled teeth, pressure members (23, 36; 39, 36; 45, 46, 36, 48) associated with both gear wheels for application of the axial tooth force components, and two bearings (27, 28; 31, 32) for each shaft (22, 30; 43, 30), characterised in that the pressure members (23, 36; 39, 36; 45, 46, 36, 48) are arranged on the shaft at a distance from the toothed wheels (21, 29; 44, 29) and the bearings (27, 28, 31, 32) located on the side of the toothed wheels facing the pressure members are arranged between the toothed wheels and the pressure members.

2. Gearing according to claim 1, characterised in that the pressure member (23, 36; 45, 46) forms an integral part, preferably forged, with its shaft (22, 30; 43, 30).

## Revendications

1. Engrenage à roues droites comportant deux roues dentées (21, 29; 44, 29) munies d'une denture hélicoïdale simple, des organes de compression (23, 36; 39, 36; 45, 46, 36, 48) adjoints aux deux roues dentées pour absorber les composantes axiales de force de dents et deux paliers (27, 28; 31, 32) pour chaque arbre (22, 30; 43, 30), caractérisé en ce que les organes de compression (23, 36; 39, 36; 45, 46, 36, 48) sont disposés sur les arbres (22, 30; 43, 30) à distance des roues dentées (21, 29; 44, 29), et les paliers (27, 28; 31, 32) situés sur un côté des roues dentées, qui est tourné vers un organe de compression, sont disposés entre les roues dentées et les organes de compression.

2. Engrenage selon la revendication 1, caractérisé en ce que l'organe de compression (23, 36; 45, 46) est d'une seule pièce avec l'arbre correspondant (22, 30; 43, 30) et en ce que, de préférence, il y est fixé par forgeage.

FIG. 1

FIG. 2

FIG. 3